# EUROPEAN PATENT SPECIFICATION

(11) **EP 4 253 846 B1**
(45) Date of publication and mention of the grant of the patent: **29.10.2025**
(21) Application number: 23181938.4
(22) Date of filing: 06.04.2010
(51) Int. Cl.: A47J 27/04, A47J 27/62, F24C 3/12, F24C 15/32

(54) **METHOD FOR CONTROLLING COOKER**
VERFAHREN ZUR STEUERUNG EINES KOCHERS
PROCÉDÉ DE COMMANDE D'APPAREIL DE CUISSON

(30) Priority: 06.04.2009 KR 20090029658
(43) Date of publication of application: 04.10.2023
(62) Divisional of application: 20160959.1
(73) Proprietor: LG Electronics Inc., Yeongdeungpo-gu Seoul 07336 (KR)
(72) Inventor: CHOI, Sung-Ho, 641-711 Gyoungsangnam-do (KR); KIM, Su-Hwan, 641-711 Gyoungsangnam-do (KR); LEE, Sang-Ki, 641-711 Gyoungsangnam-do (KR); OH, Kwang-Suk, 641-711 Gyoungsangnam-do (KR); KIM, Jeong-Kil, 641-711 Gyoungsangnam-do (KR); SHIN, Jang-Mo, 641-711 Gyoungsangnam-do (KR)
(74) Representative: Vossius & Partner Patentanwälte Rechtsanwälte mbB

(56) References cited:
- EP-A1- 1 726 881
- JP-A- 2007 303 816
- US-A1- 2004 232 140

## Description

### [Technical Field]

The present disclosure relates to a cooker, and more particularly, to a method for controlling a cooker that cooks a food using steam.

### [Background Art]

Cookers are home appliances that heat a food using electricity or gas. In recent, cookers in which a steam function for supplying steam into a food is added to supplement moisture which is evaporated during the cooking of the food are being put on the market.

US 2004/232140 A1 relates to a high-frequency heating apparatus with steam generation function and control method thereof.

JP 2007 303816 A relates to a cooker for heating-treating a heated object by supplying heat from heat sources to the heating chamber, with a steam generation part provided inside the heating chamber.

EP 1 726 881 A1 relates to a steam cooker comprising a tray-shaped case of a steam temperature-raising device having a recessed part into which steam from a steam generator flows through steam supply ports provided in a first sidewall.

### [Disclosure]

### [Technical Problem]

However, steam supplied into the cooking chamber may be discharged into the cooker.

### [Technical Solution]

Embodiments provide a method of controlling a cooker configured to effectively and safely cook a food using steam.

The invention is set out in the appended set of claims. Any references in the following description to embodiments, objects, aspects and/or examples which are not covered by the appended claims are considered as not being part of the present invention. The details of one or more embodiments are set forth in the accompanying drawings and the description below. Other features will be apparent from the description and drawings, and from the claims.

### [Advantageous Effects]

According to the embodiments, the food may be further effectively and safely cooked using steam.

A cooker controlling method as described above expects itself to have the following effects.

First, in the embodiments, steam is furnished into a cooking chamber while food is cooked in the cooking chamber. Thus, a more effective cooking by steam furnished into a cooking chamber could be performed.

Also, in the embodiments, a phenomenon that steam furnished into a cooking chamber leaks through a porous part for transferring the energy of a heater installed outside the cooking chamber to the cooking chamber is reduced. Thus, operation reliability of a product may be more improved.

In addition, in the embodiments, when steam is furnished into a cooking chamber, a convection fan and a convection motor are operated. Thus, steam supplied into the cooking chamber will be more evenly circulated inside the cooking chamber.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

### [Description of Drawings]

Fig. 1 is a schematic view of a cooker controlled by a method for controlling a cooker according to an embodiment.
Fig. 2 is a control flowchart illustrating a method for controlling a cooker according to a first embodiment.
Fig. 3 is a graph illustrating operating times of components according to the first embodiment.
Figs. 4 and 5 are control flowcharts illustrating a method for controlling a cooker according to a second embodiment.
Figs. 6 and 7 are graphs illustrating operating times of components according to the second embodiment.

### [Best Mode]

Hereinafter, a cooker controlling method according to embodiments will be explained in detail with reference to the accompanying drawings.

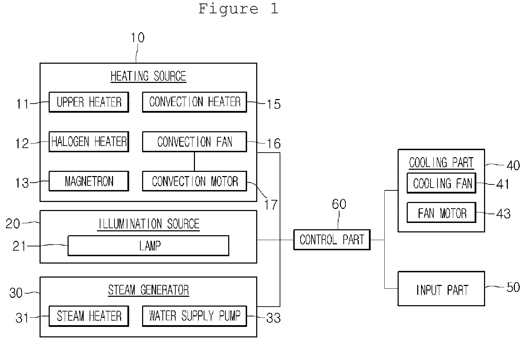

Fig. 1 is a schematic view of a cooker controlled by a method for controlling a cooker according to an embodiment.

Referring to Fig. 1, in the current embodiment, a heating source 10 for cooking food in a cooking chamber includes an upper heater 11, a halogen heater 12 and a magnetron 13. The upper heater 11 is installed in the upper portion of a cooking chamber to provide radiating heat for the cooking chamber. As the upper heater 11, a Sheath heater may be used. And, the halogen heater 12 provides radiating heat including light and heat to the cooking chamber. The halogen heater 12 provides radiating heat to the cooking chamber through a porous part (not shown) installed in the upper portion of the cooking chamber and formed at the ceiling of the cooking chamber. The magnetron 13 oscillates microwave irradiated inward the cooking chamber.

Also, the heating source 10 further includes a convention heater 15, a convention fan 16 and a convection motor 17. The convection heater 15, the convection fan 16 and the convection motor 17 supply convective heat to the cooking chamber. More particularly, since air heated by the convection heater 15 circulates around the cooking chamber by the operation of the convection fan 16, convective heat is supplied to the cooking chamber. The convection motor 17 provides a drive force for the operation of the convection fan 16.

An illumination source 20 illuminates inside the cooking chamber. As the illumination source 20, a lamp 21 may be used.

And, a steam generator 30 may be provided to supply steam into the cooking chamber. The steam generator 30 includes a steam heater 31 and a water supply pump 33. The steam heater 31 heats steam water for generating steam supplied to the cooking chamber. The water supply pump 33 supplies steam water heated by the steam heater 31.

For the cooling of the heating source 10 and the ventilation of the inside of the cooking chamber, a cooling part 40 may be provided. The cooling part 40 includes a cooling fan 41 and a fan motor 43. That is, by means of air flowing by the cooling fan 41 and the fan motor 43, the encapsulating parts of the halogen heater 12, a magnetron 13, a steam heater 31 and a water supply pump 33 may be cooled. Also, in a case the fan motor 43 is driven, the cooling fan 41 operates so that the exterior air may be supplied inside the cooking chamber, and air let inside the cooking chamber may be drained to the exterior of the cooking chamber in a state of containing oil and moisture, etc. existing in the cooking chamber.

A manipulation signal for the operation of the heating source 10 and the steam generator 30 is input to an input part 50. The input part 50 includes a first input part 51 receiving a manipulation signal for cooking food in the cooking chamber and a second input part 53 receiving a manipulation signal for the supply of steam into the cooking chamber. Herein, the first input part 51 receives a manipulation signal for cooking food in the cooking chamber using at least one of the heating sources 10 and the steam generator 30 (hereinafter, for the convenience of explanation, called a 'manipulation signal (OS0)' and a manipulation signal for cooking food in the cooking chamber using at least one of the heating sources 10 only (hereinafter, for the convenience of explanation, called a "first manipulation signal (OS1)'. More particularly, according to the manipulation signal (OS0), the operation start and end time of any one or more of the heating sources 10, or the operation start and end time of any one or more of the heating sources 10 and the operation start and end time of the steam generator 30 is set. Herein, the operation of the steam generator 30 indicates the operation of a steam pump and a water supply pump 33 in an actual meaning. And, the second input part 53 receives an manipulation signal for the start and end of a steam supplying into the cooking chamber among the operation of the heating source 10 (hereinafter, for the convenience of explanation, called 'second and third manipulation signals (OS02) (OS03)'. More particularly, according to the input time of the second manipulation signal (OS2), the operation start time of the steam generator is set. And according to the input time of the third manipulation signal (OS3), the operation end time of the steam generator 30 is set.

The control part 60 controls the operation of the heating source 10, the illumination source 20, the steam generator 30 and the cooling part 40 according to a manipulation signal inputted into the input part 50. That is, in actuality, the control part 60 controls the operation of the upper heater 11, the halogen heater 12, the convection heater 15, the convection motor 17, the lamp 21, the steam heater 31, the water supply pump 33 and the fan motor 43.

Hereinafter, a method for controlling a cooker according to a first embodiment will be described in detail with reference to the accompanying drawings.

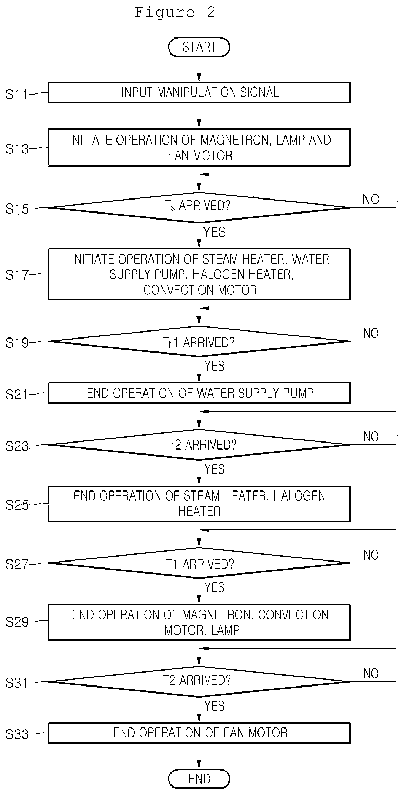

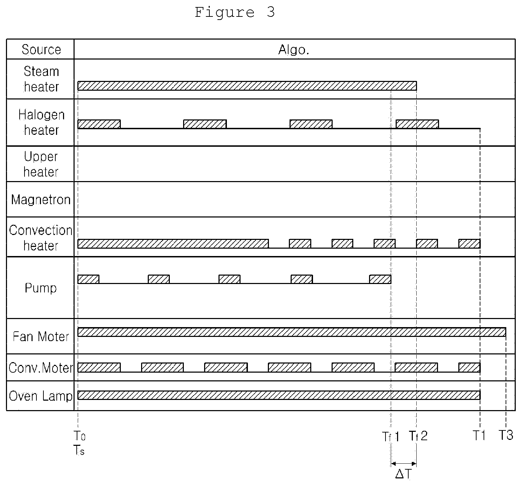

Fig. 2 is a control flowchart illustrating a method for controlling a cooker according to a first embodiment. Fig. 3 is a graph illustrating operating times of components according to the first embodiment.

Referring to Figs. 2 and 3, initially the input part 50, more particularly, the first input part 51 receives a manipulation signal (OS0) in operation S11.

In operation S11, in a case the first input part 51 receives the manipulation signal (OS0), the control part 60 controls to initiate the operation of a halogen heater 12, a convection heater 15, a convection motor 17, a lamp 21 and a fan motor 43 at a preset heating start time (TO) according to the manipulation signal (OS0) (S13). At this time, the halogen heater 12 repeats an ON/OFF action at a preset time interval according to the manipulation signal (OS0). And, the convection heater 15 repeats an ON/OFF action to maintain the cooking chamber temperature at a preset temperature according to the manipulation signal (OS0), and the convection motor repeats an ON/OFF action at a preset time interval according to the manipulation signal (OS0). The lamp 21 and the fan motor 43 continue ON action. Thus, food cooking in the cooking chamber is initiated by the halogen heater 12 and the convection heater 15. Also, illumination inside the cooking chamber by the lamp 21, and the cooling of said components and the ventilation of the cooking chamber by the cooling fan 41 are performed.

And, after the operation of the halogen heater 12, the convection heater 15, the convection motor 17, the lamp 21 and the fan motor 43 was initiated, the control part 60 determines if they have arrived at a preset steam generating start time (Ts) according to the manipulation signal (OS0) (S15). In the current embodiment, the steam generating start time (Ts) is set as the same point as the heating start time (TO). However, based on food cooked in the cooking chamber, the steam generating start time (Ts) may be set at a different point from the heating start time (TO).

In operation S15, determined that the steam generating start time (Ts) has arrived, the control part 60 controls to initiate the operation of the steam heater 13 and the water supply pump 33 (S17). Thus, by the operation of the steam heater 31 and the water supply pump 33, steam is supplied into the cooking chamber. More particularly, steam water supplied by the water supply pump 33 is heated by means of the steam heater 31 and then furnished into the cooking chamber in a steam form. Also, by the operation of the halogen heater 12, a phenomenon that steam furnished into the cooking chamber leaks out of the cooking chamber through a porous part, which transfers the light and heat of the halogen heater 12 to the cooking chamber, to cause damage to the halogen heater 12, etc., is prevented. In addition, by circulating air inside the cooking chamber through the convection fan 16 driven by the operation of the convection motor 17, steam furnished into the cooking chamber may circulate inside the cooking chamber more effectively.

In operation S17, the steam heater 31 continues an ON action, and the water supply pump 33 repeats ON/OFF action.

Next, after the operation of the steam heater 21 and the water supply pump 33 was initiated, the control part 60 determines if they have arrived at a preset water supply end time (Tf1) according to the manipulation signal (OS0) (S19). In operation S19, determined that they have arrived at the water supply end time (Tf1), the control part 60 controls to finish the operation of the water supply pump 33 (S21). Thus, the furnishing of steam water heated by the steam heater 31 is ended. However, since the steam heater 31 continues its operation, steam water pre-supplied by the water supply pump 33 is continuously heated by the steam heater 31 and then furnished into the cooking chamber in a steam form.

And, the control part 60 determines if a preset steam heating end time (Tf2) according to the manipulation signal (OS0) has arrived after the operation of the water supply pump 33 is ended (S23). In operation S23, determined that the steam heating end time (Tf2) has arrived, the control part 60 controls to finish the operation of the steam heater 31 (S25). Therefore, by completing the operation of the steam heater 31, a steam furnishing into the cooking chamber is ended.

Next, the control part 60 determines if a preset heating end time (T1) according to the manipulation signal (OS0) has arrived after the operation of the steam heater 31 is ended (S27). In operation S27, determined that the heating end time (T1) has arrived, the control part 60 controls to end the operation of the halogen heater 12, the convection heater 15 and the convection motor 17 and the operation of the lamp 21 (S29). Thus, food cooking in the cooking chamber by the halogen heater 12 and the convection heater 15, and illumination inside the cooking chamber by the lamp 21 are ended.

And, after the operation of the halogen heater 12, the convection heater 15 and the convection motor 17 and the operation of the lamp 21 was ended, the control part 60 determines if a preset fan motor end time (T2) according to the manipulation signal (OS0) has arrived (S31). In operation S31, determined that the fan motor end time (T2) has arrived, the control part 60 controls to end the operation of the fan motor 43. Thus, the cooling of said component and the ventilation of a kitchen by the fan motor 43 is ended.

### [Mode for Invention]

Hereinafter, a method for controlling a cooker according to a second embodiment will be described in detail with reference to the accompanying drawings.

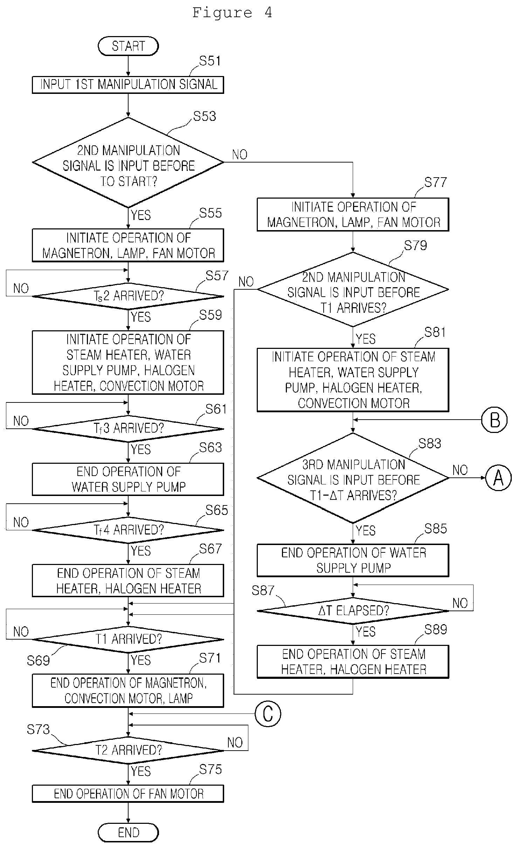

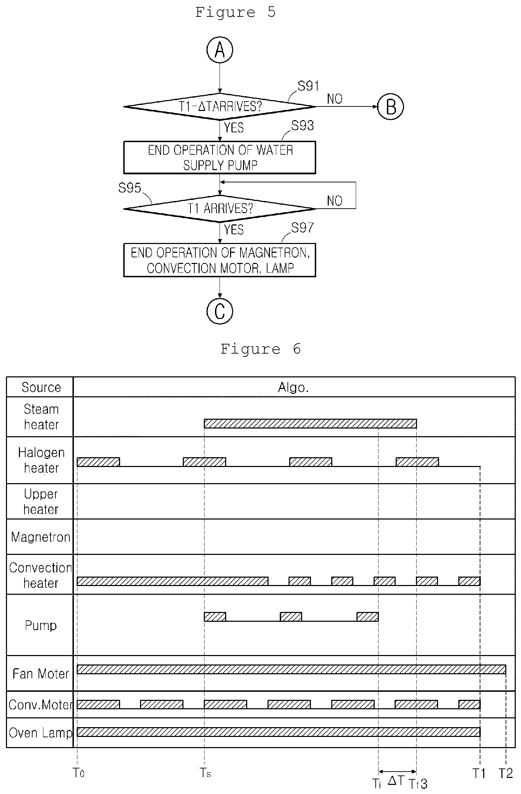

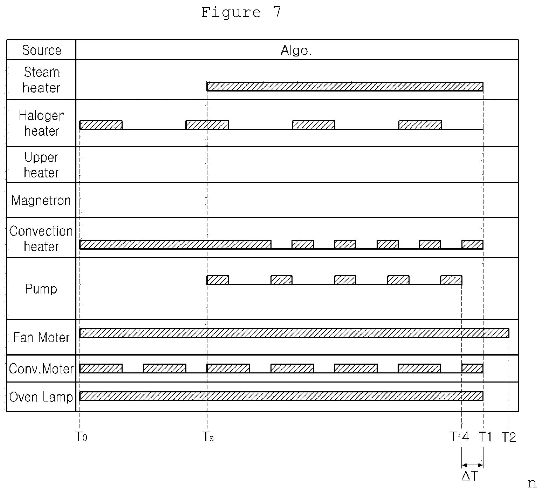

Figs. 4 and 5 are control flowcharts illustrating a method for controlling a cooker according to a second embodiment. Figs. 6 and 7 are graphs illustrating operating times of components according to the second embodiment.

Referring to Figs 4 to 7, initially an input part 50, more particularly a first input part 51 receives a first manipulation signal (OS1) (S51). In operation S51, in a case the first input part 51 receives the first manipulation signal (OS1), the control part 60 determines if the input part 50, that is a second input part 53, received a second manipulation signal (OS2) for the operation of the steam heater 31 and the water supply pump 33 before a preset heating start time (TO) according to the first manipulation signal (OS1) has arrived (S53).

In operation S53, determined that the second manipulation signal (OS2) was input before the heating start time (TO) has arrived, the control part 60 controls to initiate the operation of the halogen heater 12, the convection heater 15, the convection motor 17, the lamp 21 and the fan motor 43 at the heating start time (TO) (S55).

And, the control part 60 determines if a preset steam generation start time (Ts) according to the second manipulation signal (OS2) has arrived after the operation of the halogen heater 12, the convection heater 15, the convection motor 17, the lamp 21 and the fan motor 43 was initiated (S57). In operation S57, determined that the steam generation start time (Ts) has arrived, the control part 60 controls to initiate the operation of the steam heater 31 and the water supply pump 33 (S59).

Next, the control part 60 determines if a preset water supply end time (Tf1) according to the second manipulation signal (OS2) has arrived after the operation of the water supply pump 33, was initiated (S61). In operation S61, determined that the water supply end time (Tf1) has arrived, the control part 60 controls to end the operation of the water supply pump 33 (S63).

After the operation of the water supply pump 33 was ended, the control part 60 determines if a preset steam heating end time (Tf2) according to the second manipulation signal (OS2) has arrived (S65). In operation S65, determined that the steam heating end time (Tf2) has arrived, the control part 60 controls to end the operation of the steam heater 31 (S67).

And, the control part 60 determines if a preset heating end time (T1) according to the first manipulation signal (OS1) has arrived after the operation of the steam heater 31 was ended (S69). In operation S69, determined that the heating end time (T1) has arrived, the control part 60 controls to end the operation of the halogen heater 12, the convection heater 15 and the convection motor 17 and the operation of the lamp 21 (S71).

The control part 60 determines if a preset fan motor end time (T2) according to the first manipulation signal has arrived, after the operation of the halogen heater 12, the convection heater 15 and the convection motor 17 and the operation of the lamp 21 was ended (S73). In operation S73, determined that the fan motor end time (T2) has arrived, the control part 60 controls to end the operation of the fan motor 43 (S75). To be sure, a specific operation of the halogen heater 12, the convection heater 15, the convection motor 17, the steam heater 31, the water supply pump 33, the lamp 21 and the fan motor 43 of the operations S51 through S75 of the current embodiment as described above may be substantially the same as that of operations S11 to S33 of the aforementioned first embodiment. In other words, in a case the first input part 51 receives the manipulation signal (OS0) and in a case the first input part 51 receives the first manipulation signal (OS1) and then the second input part 53 receives the second manipulation signal (OS2) before the heating operation start time (TO) is initiated, a specific operation of the halogen heater 12, the convection heater 15, the convection motor 17, the steam heater 31, the water supply pump 33, the lamp 21 and the fan motor 43 is the same between them. Of course, the steam generation start time (Ts), the water supply end time (Tf1) and the steam heating end time (Tf2) may be differently set based on the manipulation signal (OS0) and the second manipulation signal (OS2). Therefore, in the control according to the operations S51 to S75 of the current embodiment, a specific operation of the halogen heater 12, the steam heater 15, the convection motor 17, the steam heater 31, the water supply pump 33, the lamp 21 and the fan motor 43 could be understood more definitely with reference to Fig. 3.

In a case the control part 60 determines that the second manipulation signal (OS2) was not inputted in operation S53 before a heating start time (TO) has arrived, the control part 60 controls to initiate the operation of the halogen heater 12, the convection heater 15, the convection motor 17, the lamp 21 and the fan motor 43 at the heating start time (TO) (S77). And, the control part 60 determines again if the second manipulation signal OS2 was inputted before the heating end time (T1) has arrived (S79).

In operation S79, determined that the second manipulation signal (OS2) was inputted before the heating end time (T1) has arrived, the control part 60 controls to initiate the operation of the steam heater 31 and the water supply pump 33 at a time (Ts2) when the second manipulation signal (OS2) is input (S81). When the operation of the steam heater 31 and the water supply pump 33 is initiated, the control part 60 determines if the second input part 53 received a third input signal (OS3) for the end of the steam heater 31 and the water supply pump 33 before a point, that is a previous time by a preset remaining water removal time (ΔT) from the heating end time (T1), has arrived (S83).

In operation S83, determined that the third manipulation signal (OS3) was input before a previous time by a preset remaining water removal time (ΔT) from the heating end time (T1) has arrived, the control part 60 controls to end the operation of the water supply pump 33 at a time (Tf3) when the third operation time (OS3) is input (S85). And, when the operation of the water supply pump 33 is ended, the control part 60 determines if the remaining water removal time (ΔT) has elapsed, and controls to end the operation of the steam heater 31 at a time (Tf4) when the remaining water removal time (ΔT) has elapsed from the input time (Tf3) (S87) (S89).

In operation S89, if the operation of the steam heater 31 is ended, the operations S69 through S75 are performed. As described above, specific operations of the upper heater 11, the convection heater 15, the convection motor 17, the steam heater 31, the water supply pump 33, the lamp 21, and the fan motor 43 in operation S51, operation S53, operations S77 through S83, operations S77 through S89, operation S69 and operation S75 could be understood more definitely with reference to Fig. 6.

In the meantime, in operation S83, in a case the third manipulation signal (OS3) was not inputted before a previous time by a preset remaining water removal time (ΔT) from the heating end time (T1) has arrived, the control unit 60 controls to end the operation of the water supply pump 33 when a previous time by a preset remaining water removal time (ΔT) from the heating end time (T1) arrives (S91) (S93).

Next, the control part 60 determines if the heating end time (T1) has arrived (S95). Then, determined that the heating end time (T1) has arrived, the control part 60 controls to end the operation of the halogen heater 12, the convection heater 15, the convection motor 17, the steam heater 31 and the lamp 21 (S97). And, the control part 60 performs the operations S73 and S75. In the current embodiment, specific operations of the halogen heater 12, the convection heater 15, the convection motor 17, the steam heater 31, the water supply pump 33, the lamp 21 and the fan motor 43 in operation S51, operation S53, operations S77 through S83, operations S91 through S97, operation S73 and operation S75 could be understood more definitely with reference to Fig. 7.

While it has not been described in detail in the above-mentioned embodiments, in the course of cooking food in the cooking chamber, the operation of the upper heater, the halogen heater, the magnetron, the convection heater, the convection motor, the steam heater and the water supply pump would be ended when the cooking chamber is opened, that is, when a door entering into the cooking chamber is open. Considering it is the fact applying to a general cooker, for example an electronic range, the related detailed description will be omitted.

## Claims

1. A method for controlling a cooker between an input of a first manipulation signal (OS1) and end of operation of a steam heater (31), comprising:
receiving the first manipulation signal (OS1) for cooking food in a cooking chamber using at least one heating source (10) (S51);
determining if a second manipulation signal (OS2) for an operation of the steam heater (31) and a water supply pump (33), is inputted before a preset heating start time (TO) according to the first manipulation signal (OS1) has arrived (S53);
initiating operation of at least one of a halogen heater (12), a convection heater (15), a convection motor (17), a lamp (21) and a fan motor (43) at the heating start time (TO), when the second manipulation signal (OS2) is inputted before the heating start time (TO) has arrived (S55);
determining if a preset steam generation start time (Ts2) according to the second manipulation signal (OS2) has arrived after the operation of the halogen heater (12), the convection heater (15), the convection motor (17), the lamp (21) and the fan motor (43) was initiated (S57); and
initiating the operation of the steam heater (31) and the water supply pump (33), when determined that the steam generation start time (Ts) has arrived (S59),
**characterized in that** the method further comprises:
determining if a preset water supply end time (Tf1) according to the second manipulation signal (OS2) has arrived after the operation of the water supply pump (33), was initiated (S61);
when determined that the water supply end time (Tf1) has arrived, terminating the operation of the water supply pump (33) (S63);
when the operation of the water supply pump (33) was ended, determining if a preset steam heating end time (Tf2) according to the second manipulation signal (OS2) has arrived (S65);and
when determined that the steam heating end time (Tf2) has arrived, terminating the operation of the steam heater (31) (S67).

2. The method according to claim 1, further comprising:
determining if a preset heating end time (T1) according to the first manipulation signal (OS1) has arrived after the operation of the steam heater (31) was ended (S69).

3. The method according to claim 2, further comprising:
when determined that the heating end time (T1) has arrived, terminating the operation of the halogen heater (12), the convection heater (15) and the convection motor (17) and the operation of the lamp (21) (S71).

4. The method according to claim 3, further comprising:
determining if a preset fan motor end time (T2) according to the first manipulation signal(OS1) has arrived, after the operation of the halogen heater (12), the convection heater (15) and the convection motor (17) and the operation of the lamp (21) was ended; and (S73)
when determined that the fan motor end time (T2) has arrived, terminating the operation of the fan motor (43) (S75).

5. The method according to claim 1, further comprising:
when it is determined that the second manipulation signal (OS2) is not inputted before the preset heating start time (TO) has arrived, initiating operation of at least one of the halogen heater (12), the convection heater (15), the convection motor (17), the lamp (21) and the fan motor (43) at the preset heating start time (TO) (S77).

6. The method according to claim 5, further comprising:
determining if the second manipulation signal (OS2) is inputted before heating end time (T1) has arrived (S79).

7. The method according to claim 6, further comprising:
when it is determined that the second manipulation signal (OS2) is inputted before the heating end time (T1) has arrived, initiating operation of the steam heater (31) and the water supply pump (33) at a time (Ts2) (S81).

8. The method according to claim 7, further comprising:
when the operation of the steam heater (31) and the water supply pump (33) is initiated, determining if a third manipulation signal (OS3) for the end of the steam heater (31) and the water supply pump (33), is received before a previous time by a preset remaining water removal time (ΔT) from the heating end time (T1), has arrived (S83).

9. The method according to claim 8, further comprising:
when it is determined that the third manipulation signal (OS3) is inputted before a previous time by a preset remaining water removal time (ΔT) from the heating end time (T1) has arrived, terminating the operation of the water supply pump (33) at a time (Tf3) when the third operation time (OS3) is input (S85).

10. The method according to claim 9, further comprising:
when the operation of the water supply pump (33) is ended, determining if the remaining water removal time (ΔT) has elapsed (S87); and
when the remaining water removal time (ΔT) has elapsed, terminating the operation of the steam heater (31) at a time (Tf4) (S89).

11. The method according to claim 1, wherein the operation of the steam heater (31) and water supply pump (33) is initiated and completed according to a user choice before the operation of the heating source (10) is ended, separately of the operation start of the heating source (10).

## Patentansprüche

1. Verfahren zur Steuerung eines Garofens zwischen einer Eingabe eines ersten Bediensignals (OS1) und Beenden des Betriebs einer Dampfheizung (31), das aufweist:
Empfangen des ersten Bediensignals (OS1) zum Garen von Speisen in einem Garraum unter Verwendung mindestens einer Heizquelle (10) (S51),
Bestimmen, ob ein zweites Bediensignal (OS2) für einen Betrieb der Dampfheizung (31) und einer Wasserzufuhrpumpe (33) eingegeben wird, bevor eine voreingestellte Heizstartzeit (TO) gemäß dem ersten Bediensignal (OS1) erreicht ist (S53),
Initiieren des Betriebs einer Halogenheizung (12) und/oder einer Konvektionsheizung (15) und/oder eines Konvektionsmotors (17) und/oder einer Lampe (21) und/oder eines Ventilatormotors (43) zur Heizstartzeit (TO), wenn das zweite Bediensignal (OS2) eingegeben wird, bevor die Heizstartzeit (TO) erreicht ist (S55),
Bestimmen, ob eine voreingestellte Dampferzeugungs-Startzeit (Ts2) gemäß dem zweiten Bediensignal (OS2) erreicht ist, nachdem der Betrieb der Halogenheizung (12), der Konvektionsheizung (15), des Konvektionsmotors (17), der Lampe (21) und des Ventilatormotors (43) initiiert wurde (S57), und
wenn bestimmt wird, dass die Dampferzeugungs-Startzeit (Ts) erreicht ist, Initiieren des Betriebs der Dampfheizung (31) und der Wasserzufuhrpumpe (33) (S59),
**dadurch gekennzeichnet, dass** das Verfahren ferner folgende Schritte aufweist:
Bestimmen, ob eine voreingestellte Wasserzufuhr-Endzeit (Tf1) gemäß dem zweiten Bediensignal (OS2) erreicht ist, nachdem der Betrieb der Wasserzufuhrpumpe (33) initiiert wurde (S61),
wenn bestimmt wird, dass die Wasserzufuhr-Endzeit (Tf1) erreicht ist, Beenden des Betriebs der Wasserzufuhrpumpe (33) (S63),
wenn der Betrieb der Wasserzufuhrpumpe (33) beendet wurde, Bestimmen, ob eine voreingestellte Dampfheiz-Endzeit (Tf2) gemäß dem zweiten Bediensignal (OS2) erreicht ist (S65), und
wenn bestimmt wird, dass die Dampfheiz-Endzeit (Tf2) erreicht ist, Beenden des Betriebs der Dampfheizung (31) (S67).

2. Verfahren nach Anspruch 1, das ferner aufweist:
Bestimmen, ob eine voreingestellte Heizendzeit (T1) gemäß dem ersten Bediensignal (OS1) erreicht ist, nachdem der Betrieb der Dampfheizung (31) beendet wurde (S69).

3. Verfahren nach Anspruch 2, das ferner aufweist:
wenn bestimmt wird, dass die Heizendzeit (T1) erreicht ist, Beenden des Betriebs der Halogenheizung (12), der Konvektionsheizung (15) und des Konvektionsmotors (17), und des Betriebs der Lampe (21) (S71).

4. Verfahren nach Anspruch 3, das ferner aufweist:
Bestimmen, ob eine voreingestellte Ventilatormotor-Endzeit (T2) gemäß dem ersten Bediensignal (OS1) erreicht ist, nachdem der Betrieb der Halogenheizung (12), der Konvektionsheizung (15) und des Konvektionsmotors (17) und der Betrieb der Lampe (21) beendet wurden (S73); und
wenn bestimmt wird, dass die Ventilatormotor-Endzeit (T2) erreicht ist, Beenden des Betriebs des Ventilatormotors (43) (S75).

5. Verfahren nach Anspruch 1, das ferner aufweist:
wenn bestimmt wird, dass das zweite Bediensignal (OS2) nicht eingegeben wird, bevor die voreingestellte Heizstartzeit (TO) erreicht ist, Initiieren des Betriebs der Halogenheizung (12) und/oder der Konvektionsheizung (15) und/oder der Konvektionsmotors (17) und/oder der Lampe (21) und/oder des Ventilatormotors (43) zur voreingestellten Heizstartzeit (TO) (S77).

6. Verfahren nach Anspruch 5, das ferner aufweist:
Bestimmen, ob das zweite Bediensignal (OS2) eingegeben wird, bevor die Heizendzeit (T1) erreicht ist (S79).

7. Verfahren nach Anspruch 6, das ferner aufweist:
wenn bestimmt wird, dass das zweite Bediensignal (OS2) eingegeben wird, bevor die Heizendzeit (T1) erreicht ist, Initiieren des Betriebs der Dampfheizung (31) und der Wasserzufuhrpumpe (33) zu einer Zeit (Ts2) (S81).

8. Verfahren nach Anspruch 7, das ferner aufweist:
wenn der Betrieb der Dampfheizung (31) und der Wasserzufuhrpumpe (33) initiiert wird, Bestimmen, ob ein drittes Bediensignal (OS3) für das Beenden der Dampfheizung (31) und der Wasserzufuhrpumpe (33) empfangen wird, bevor eine um eine voreingestellte Restwasserentfernungszeit (ΔT) frühere Zeit als die Heizendzeit (T1) erreicht ist (S83).

9. Verfahren nach Anspruch 8, das ferner aufweist:
wenn bestimmt wird, dass das dritte Bediensignal (OS3) eingegeben wird, bevor eine um eine voreingestellte Restwasserentfernungszeit (ΔT) frühere Zeit als die Heizendzeit (T1) erreicht ist, Beenden des Betriebs der Wasserzufuhrpumpe (33) zu der Zeit (Tf3), wenn die dritte Betriebszeit (OS3) eingegeben wird (S85).

10. Verfahren nach Anspruch 9, das ferner aufweist:
wenn der Betrieb der Wasserzufuhrpumpe (33) beendet wird, Bestimmen, ob die Restwasserentfernungszeit (ΔT) vergangen ist (S87), und
wenn die Restwasserentfernungszeit (ΔT) vergangen ist, Beenden des Betriebs der Dampfheizung (31) zu einer Zeit (Tf4) (S89).

11. Verfahren nach Anspruch 1, wobei der Betrieb der Dampfheizung (31) und der Wasserzufuhrpumpe (33) gemäß einer Benutzerauswahl vor Beendigung des Betriebs der Heizquelle (10), unabhängig vom Betriebsbeginn der Heizquelle (10), initiiert und abgeschlossen wird.

## Revendications

1. Procédé de commande d'un appareil de cuisson entre une entrée d'un premier signal de manipulation (OS1) et la fin du fonctionnement d'un dispositif de chauffage à vapeur (31), comprenant :
la réception d'un premier signal de manipulation (OS1) pour cuire des aliments dans une chambre de cuisson en utilisant au moins une source de chauffage (10) (S51) ;
le fait de déterminer si un deuxième signal de manipulation (OS2) pour un fonctionnement du dispositif de chauffage à vapeur (31) et d'une pompe d'approvisionnement en eau (33), est entré avant qu'un temps de début de chauffage prédéfini (TO) en fonction du premier signal de manipulation (OS1) ne soit arrivé (S53) ;
l'initiation du fonctionnement d'au moins un d'un dispositif de chauffage à halogène (12), d'un dispositif de chauffage par convection (15), d'un moteur de convection (17), d'une lampe (21) et d'un moteur de ventilateur (43) au temps de début de chauffage prédéfini (TO) lorsque le deuxième signal de manipulation (OS2) est entré avant que le temps de début de chauffage prédéfini (TO) ne soit arrivé (S55) ;
le fait de déterminer si un temps de début de génération de vapeur prédéfini (Ts2) en fonction du deuxième signal de manipulation (OS2) est arrivé après que le fonctionnement du dispositif de chauffage à halogène (12), du dispositif de chauffage par convection (15), du moteur de convection (17), de la lampe (21) et du moteur de ventilateur (43) a été initié (S57) ; et
l'initiation du fonctionnement du dispositif de chauffage à vapeur (31) et de la pompe d'approvisionnement en eau (33) lorsqu'il est déterminé que le temps de début de génération de vapeur (Ts) est arrivé (S59),
**caractérisé en ce que** le procédé comprend en outre :
le fait de déterminer si un temps de fin d'alimentation en eau prédéfini (Tf1) en fonction du deuxième signal de manipulation (OS2) est arrivé après que le fonctionnement de la pompe d'approvisionnement en eau (33) a été initié (S61) ;
lorsqu'il est déterminé que le temps de fin d'approvisionnement en eau (Tf1) est arrivé, la terminaison du fonctionnement de la pompe d'approvisionnement en eau (33) (S63) ;
lorsque le fonctionnement de la pompe d'approvisionnement en eau (33) a été arrêté, le fait de déterminer si un temps de fin de chauffage à la vapeur prédéfini (Tf2) en fonction du deuxième signal de manipulation (OS2) est arrivé (S65) ; et
lorsqu'il est déterminé que le temps de fin de chauffage à la vapeur (Tf2) est arrivé, la terminaison du fonctionnement du dispositif de chauffage à vapeur (31) (S67).

2. Procédé selon la revendication 1, comprenant en outre :
le fait de déterminer si un temps de fin de chauffage prédéfini (T1) en fonction du premier signal de manipulation (OS1) est arrivé après que le fonctionnement du dispositif de chauffage à vapeur (31) a été terminé (S69).

3. Procédé selon la revendication 2, comprenant en outre :
lorsqu'il est déterminé que le temps de fin de chauffage (T1) est arrivé, la terminaison du fonctionnement du dispositif de chauffage à halogène (12), du dispositif de chauffage par convection (15) et du moteur de convection (17) et du fonctionnement de la lampe (21) (S71).

4. Procédé selon la revendication 3, comprenant en outre :
le fait de déterminer si un temps de fin de moteur de ventilateur prédéfini (T2) en fonction du premier signal de manipulation (OS1) est arrivé, après que le fonctionnement du dispositif de chauffage à halogène (12), du dispositif de chauffage par convection (15) et du moteur de convection (17) et le fonctionnement de la lampe (21) était terminé ; et (S73)
lorsqu'il est déterminé que le temps de fin de moteur de ventilateur (T2) est arrivé, la terminaison du fonctionnement du moteur de ventilateur (43) (S75).

5. Procédé selon la revendication 1, comprenant en outre :
lorsqu'il est déterminé que le deuxième signal de manipulation (OS2) n'a pas été entré avant que le temps de début de chauffage prédéfini (TO) ne soit arrivé, l'initiation du fonctionnement d'au moins un du dispositif de chauffage à halogène (12), du dispositif de chauffage par convection (15), du moteur de convection (17), de la lampe (21) et du moteur de ventilateur (43) au temps de début de chauffage prédéfini (TO) (S77).

6. Procédé selon la revendication 5, comprenant en outre :
le fait de déterminer si le deuxième signal de manipulation (OS2) est entré avant que le temps de fin de chauffage (T1) ne soit arrivé (S79).

7. Procédé selon la revendication 6, comprenant en outre :
lorsqu'il est déterminé que le deuxième signal de manipulation (OS2) est entré avant que le temps de fin de chauffage (T1) ne soit arrivé, l'initiation du fonctionnement du dispositif de chauffage à vapeur (31) et de la pompe d'approvisionnement en eau (33) à un moment (Ts2) (S81).

8. Procédé selon la revendication 7, comprenant en outre :
lorsque le fonctionnement du dispositif de chauffage à vapeur (31) et de la pompe d'approvisionnement en eau (33) est initié, le fait de déterminer si un troisième signal de manipulation (OS3) pour la fin du dispositif de chauffage à vapeur (31) et de la pompe d'approvisionnement en eau (33) est reçu avant qu'un temps précédent par un temps de retrait d'eau restante prédéfini (ΔT) du temps de fin de chauffage (T1) ne soit arrivé (S83).

9. Procédé selon la revendication 8, comprenant en outre :
lorsqu'il est déterminé que le troisième signal de manipulation (OS3) est entré avant qu'un temps précédent par un temps de retrait d'eau restante prédéfini (ΔT) du temps de fin de chauffage (T1) ne soit arrivé, la terminaison du fonctionnement de la pompe d'approvisionnement en eau (33) à un temps (Tf3) lorsque le troisième temps de fonctionnement (OS3) est entré (S85).

10. Procédé selon la revendication 9, comprenant en outre :
lorsque le fonctionnement de la pompe d'approvisionnement en eau (33) est terminé, le fait de déterminer si le temps de retrait d'eau restante (ΔT) s'est écoulé (S87) ; et
lorsque le temps de retrait d'eau restante (ΔT) s'est écoulé, la terminaison du fonctionnement du dispositif de chauffage à vapeur (31) à un temps (Tf4) (S89).

11. Procédé selon la revendication 1, dans lequel le fonctionnement du dispositif de chauffage à vapeur (31) et de la pompe d'approvisionnement en eau (33) est initié et achevé selon un choix d'utilisateur avant que le fonctionnement de la source de chauffage (10) ne soit terminé, séparément du début du fonctionnement de la source de chaleur (10).
